**Europäisches Patentamt**

(19) **European Patent Office**

**Office européen des brevets**

(11) Numéro de publication: **0 230 158**
**B1**

(12) **FASCICULE DE BREVET EUROPEEN**

(45) Date de publication du fascicule du brevet: **06.06.90**

(21) Numéro de dépôt: **86402411.2**

(22) Date de dépôt: **28.10.86**

(51) Int. Cl.⁵: **G 01 S 7/52**, G 01 S 7/62

(54) **Processeur numérique d'images échographiques, à interpolation.**

(30) Priorité: **28.10.85 FR 8515989**

(43) Date de publication de la demande:
**29.07.87 Bulletin 87/31**

(45) Mention de la délivrance du brevet:
**06.06.90 Bulletin 90/23**

(84) Etats contractants désignés:
**AT BE CH DE ES GB GR IT LI LU NL SE**

(56) Documents cités:
**EP-A-0 068 852**
**EP-A-0 158 920**
**WO-A-82/02637**
**FR-A-2 341 141**
**FR-A-2 493 649**
**FR-A-2 542 875**

**IBM JOURNAL OF RESEARCH &
DEVELOPMENT, vol. 28, no. 4, juillet 1984,
pages 379-392, New York, US; R.MATICK et al.:
"All points addressable raster display memory"**

(73) Titulaire: **UNIVERSITE RENE DESCARTES
(PARIS V)
24, rue du Faubourg St Jacques
F-75674 Paris Cédex 14 (FR)**

(72) Inventeur: **Richard, Bruno
44, Sentier Darwin
F-94800 Villejuif (FR)**

(74) Mandataire: **Fort, Jacques et al
CABINET PLASSERAUD 84, rue d'Amsterdam
F-75009 Paris (FR)**

(56) Documents cités:
**IEEE 1984 ULTRASONICS SYMPOSIUM
PRCEEDINGS, vol. 2, 14-16 novembre 1984,
pages 723-727, IEEE, New York, US; S.B. PARK
et al.: "A new scan conversion algorithm for real
time sector scanner"**

**EP 0 230 158 B1**

## Description

L'invention concerne les processeurs numériques pour traiter des échantillons échographiques en vue d'en former une image, permettant de fournir, à partir d'une mémoire d'image contenant des échantillons successifs du signal d'écho suivant plusieurs lignes d'exploration, des signaux destinés à un organe de visualisation à balayage de type télévision (dit "Raster scan" en terminologie anglo-saxonne). Elle concerne plus particulièrement les processeurs capables de fonctionner en temps réel, c'est-à-dire de traiter les informations acquises en mode dynamique, à une cadence qui est généralement de l'ordre de 2 MHz.

Les dispositifs d'échographie possèdent en général une mémoire d'image, qui permet de conserver l'image échographique obtenue à l'aide d'une sonde de balayage. Parmi les dispositifs d'échographie, certains fournissent des échantillons répartis le long de lignes d'exploration parallèles les unes aux autres, obtenus par balayage électronique à l'aide d'un réseau rectilinéaire de transducteurs. Les échantillons se placent alors aux noeuds d'un réseau rectangulaire. D'autres dispositifs sont à balayage sectoriel mécanique ou électronique et fournissent des échantillons répartis le long de lignes d'exploration divergentes. Dans ce dernier cas, le processeur numérique associé à la mémoire doit permettre de transformer les coordonnées polaires des échantillons en coordonnées rectangulaires pour permettre la visualisation sur un organe à balayage de type télévision. De plus, cette transformation doit éviter les artefacts liés à la numérisation de lignes obliques par une matrice de mémoire rectangulaire.

On connaît des processeurs remplissant cette dernière fonction. Le document FR 2 531 783 décrit en particulier un processeur de constitution particulièrement simple. Des solutions beaucoup plus complexes ont été décrites dans d'autres documents, par exemple FR—A—2 493 649 ou 2 494 022. Les dispositifs décrits dans ces brevets effectuent une interpolation entre échantillons successifs pour améliorer l'impression visuelle. Mais, dans tous les cas, le processeur ne laisse à l'exploitant du dispositif d'échographie que très peu de liberté pour modifier l'image après sa mise en mémoire. En général, le dispositif ne permet que de modifier le contraste de l'image par modification de l'affectation des niveaux de gris.

On connaît encore (EP—A—158 920) un processeur conforme au préambule de la revendication 1, permettant de corriger l'erreur de balayage, fonction de la profondeur de l'échantillon.

L'invention vise à fournir un processeur permettant d'effectuer (en plus des fonctions classiques de mise en mémoire, d'interpolation et éventuellement de conversion de balayage sectoriel en affichage de type télévision), une correction tenant compte de l'absorption dans le milieu étudié et des réglages réalisés par voie numérique sur informations stockées en mémoire et correspondant à ceux qui ne sont jusqu'ici applicables qu'à l'information directement reçue de la sonde (et non pas à l'information mémorisée). L'invention vise plus particulièrement à fournir un processeur numérique capable de fonctionner à la cadence requise pour une imagerie dynamique tout en restant de constitution relativement simple.

Dans ce but, l'invention propose notamment un processeur du type ci-dessus défini, caractérisé en ce que lesdits moyens sont agencés de façon à effectuer une correction de l'atténuation subie par les échantillons en fonction de leur profondeur et en ce que lesdits moyens agissent sur le signal de sortie de l'opérateur.

Un tel dispositif permet de compenser de façon simple la variation de l'absorption en fonction de la profondeur de l'écho.

Un même processeur suivant l'invention est utilisable pour traiter, sans modification des circuits et moyennant un changement simple du logiciel, aussi bien une image obtenue par balayage sectoriel qu'une image constituée d'échantillons prélevés sur des lignes d'exploration parallèles. Le processeur permet dans tous les cas de sélectionner aisément, sur une image figée en mémoire, le format de présentation et l'agrandissement avant d'effectuer par exemple une photographie.

L'invention sera mieux comprise à la lecture de la description qui suit d'un mode particulier d'exécution, donné à titre d'exemple non limitatif. La description se réfère aux dessins qui l'accompagnent, dans lesquels:

—la Figure 1 est un schéma de balayage sectoriel, indiquant les notations qui seront adoptées pour décrire l'invention.

—la Figure 2 est un schéma montrant une répartition des échantillons en rangées et colonnes en mémoire d'image.

—la Figure 3 est un schéma à grande échelle destinée à faire apparaître les notations utilisées pour le calcul d'interpolation.

—la Figure 4 est un synoptique montrant la constitution générale d'un processeur suivant l'invention.

—la Figure 5 est un synoptique du calculateur d'adresses du processeur de la Figure 4.

—la Figure 6 est un synoptique de principe de l'interpolateur du processeur de la Figure 4.

—la Figure 7 est un synoptique de principe de moyens de correction utilisables dans le processeur de la Figure 4.

Le processeur qui sera maintenant décrit est destiné à être incorporé à un échographe utilisant une sonde à balayage sectoriel, telle que celle décrite dans le document FR 25 09 496. Un tel échographe permet de stocker une image sous forme d'échantillons répartis suivant des lignes d'exploration divergeant à partir d'un point dans un secteur angulaire $\theta$. On désignera par $N_m$ le nombre de lignes et par

2

$n_m$ le nombre d'échantillons prélevés, à intervalles de temps égaux, sur chaque ligne d'exploration. Les échos qui se succèdent le long d'une ligne sont numérisés à une fréquence $f$, généralement de quelques MHz, après avoir été soumis à une amplification logarithmique et avoir subi une détection d'enveloppe.

Souvent, on adoptera un balayage à $N_m=128$ lignes de chacune $n_m=512$ échantillons.

Les échantillons ainsi recueillis sont stockés dans une mémoire numérique de dimension suffisante pour une image complète. Pour présenter sur un écran à balayage de type télévision l'information contenue dans la mémoire en respectant la répartition géométrique des échos, il faut effectuer une transformation de coordonnées et affecter une valeur à chacun des pixels répartis sur l'écran suivant des lignes de balayage (direction X) se succèdant dans la trame de représentation suivant la direction Y orthogonale à X.

Souvent on exploitera la symétrie du balayage sectoriel en prenant l'origine des X au milieu de l'écran de visualisation, l'origine des Y étant en haut de l'écran et correspondant au point de divergence des lignes d'exploration.

La valeur du pixel de coordonnées (X, Y) est idéalement celle de l'échantillon stocké dans la mémoire à l'adresse de (n, N) telle que:

$$n=\sqrt{X^2+Y^2}$$

$$N-Nm/2=(1/\Delta\theta)\ \text{arctg}\ X/Y$$

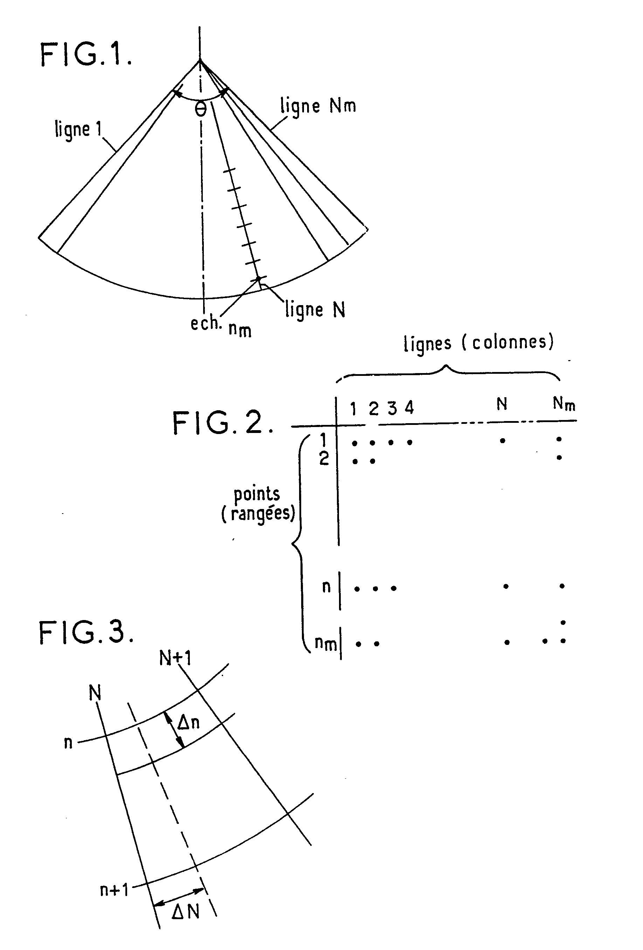

mais, étant donné que l'on ne dispose que d'échantillons discrets, on obtiendra en général pour $n$ et N des valeurs comportant une partie décimale. La partie entière de ces valeurs correspondra à l'un des échantillons du voisinage du pixel à afficher sur l'écran. Sur la figure 3 (qui correspond à un fragment de la partie droite de la figure 1), on voit que la valeur (brillance par exemple) à attribuer au pixel (X, Y) peut être calculée à partir des quatre points du voisinage qui entourent (X, Y) dans la mémoire d'images par interpolations à condition de disposer des valeur $\Delta n$ et $\Delta N$;

$$(X, Y)=(N, n)\cdot I\ (\Delta N, \Delta n)$$
$$+(N+1, n)\cdot I\ (1-\Delta N, \Delta n)$$
$$+(N, n+1)\cdot I\ (\Delta N, 1-\Delta n)$$
$$+(N+1, n+1)\cdot I\ (1-\Delta N, 1-\Delta n)$$

Dans cette formule, la fonction I est la fonction d'interpolation. Pour des raisons de simplicité on utilisera généralement l'interpolation bilinéaire de la forme:

$$I\ (\Delta N, \Delta n)=(1-\Delta N)\cdot (1-\Delta n)$$

On peut évidemment utiliser d'autres fonctions faisant intervenir quatre points, sans aucune complication. On peut même, mais en compliquant notabement le système, faire intervenir plus de quatre points dans une direction et/ou dans l'autre.

On voit que, pour chacun des pixels de la matrice de visualisation, il faut calculer les valeurs $N+\Delta N$ et $n+\Delta n$ qui correspondent à ces coordonnées X, Y. Il faut ensuite extraire de la mémoire d'image les quatre points du voisinage et effectuer sur les quatre valeurs numériques correspondantes les calculs d'interpolation pour obtenir la valeur exacte du pixel X, Y et cela sur chaque pixel d'une ligne du balayage horizontal. Dans le cas d'un balayage télévision standard, le calcul doit être renouvelé 512 fois par ligne, c'est-à-dire en 125 ns au maximum.

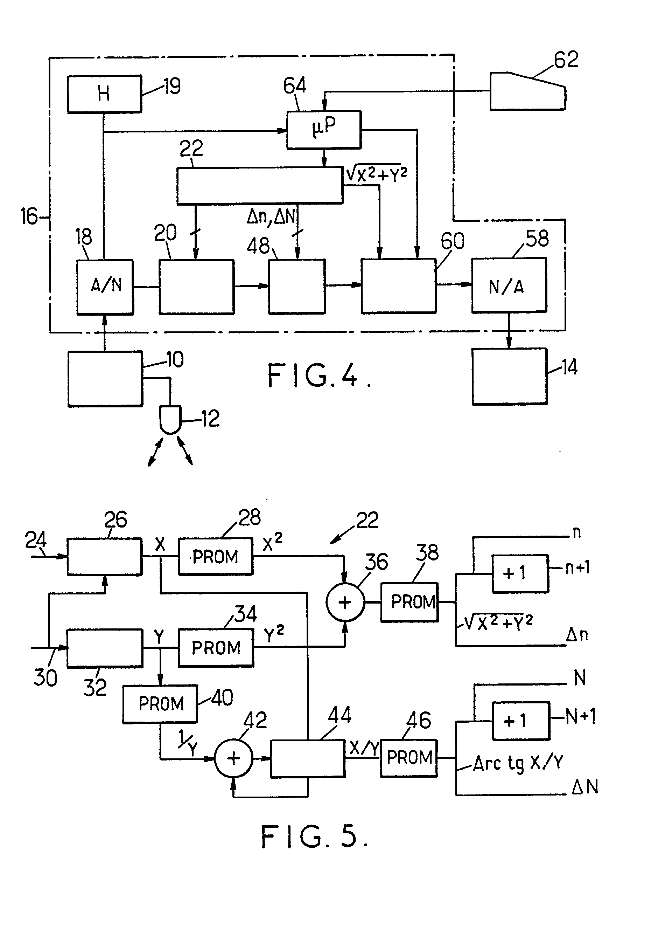

Le processeur dont le schéma est donné en figure 4 répond à cette nécessité. Il est associé à un appareil d'échographie 10 que l'on supposera de type classique, muni d'une sonde 12 de balayage sectoriel dans un angle $\theta$ et à un organe de visualisation 14 qu'on supposera être un moniteur de télévision.

L'appareil d'échographie 10 fournit, sur sa sortie de données, un signal représentatif de l'écho reçu, après une amplification qui est généralement logarithmique. Le processeur 16 comporte un échantillonneur d'entrée muni d'un convertisseur analogique-numérique 18 qui numérise chaque échantillon, fréquemment sous forme d'un mot de six éléments binaires ou bits à une fréquence fixée par une horloge 19 qui cadence l'ensemble du système. La sortie du convertisseur 18 attaque une mémoire d'image 20 de capacité suffisante pour stocker un nombre de mots au moins égal au nombre d'échantillons recueillis dans une image échographique complète.

La mémoire d'image 20 est une mémoire vive, statique ou dynamique, organisée en colonnes et rangées. Dans une même colonne seront stockés tous les $n_m$ mots d'une même ligne d'exploration (en général 512 mots). Les $n_m$ rangées correspondront alors chacune à un temps d'échantillonnage donné.

Pour utiliser la symétrie de l'image, les parties gauche et droite de cette dernière seront généralement placées dans des boîtiers différents, à des adresses identiques pour des points symétriques par rapport à l'axe de l'image.

Conformément à l'invention, et pour permettre d'accéder simultanément aux quatre échantillons entourant un même pixel, les échantillons de deux lignes successives sont rangées dans des pages différentes et accessibles simultanément de la mémoire d'image (pages qui peuvent être matérialisées par des boîtiers différents). De même, deux échantillons successifs sur une même ligne d'exploration sont également rangés dans des pages différentes et accessibles simultanément. Ainsi, quatre échantillons voisins entourant un pixel à reconstruire seront dans quatre pages différentes et seront accessibles simultanément. Les quatre échantillons correspondant à un pixel symétrique du premier du premier par rapport à l'axe de l'image, stockés dans quatre autres pages, pourront être également relues en même temps.

Dans la pratique, diverses répartitions d'échantillons sont possibles. A titre de simple exemple, on peut affecter deux boîtiers aux lignes paires, deux boîtiers aux lignes impaires d'exploration et, pour chaque ligne, ranger les échantillons pairs dans un boîtier et les échantillons impairs dans l'autre.

Le processeur 16 comporte un calculateur d'adresse 22 permettant, pour chaque pixel d'une ligne de visualisation à son tour, de déterminer les adresses des quatre échantillons à prélever et les valeurs de $\Delta n$ et $\Delta N$, qui seront utilisées pour l'interpolation.

En général, le calcul des adresses s'effectuera sur chaque ligne du balayage télévision à son tour, c'est-à-dire pour des valeurs croissantes de Y, et pour chaque ligne, pour des pixels successifs à partir de la ligne médiane de l'image. On exploitera généralement la symétrie de l'image pour claculer simultanément les adresses pour les parties droite et gauche de cette image. La figure 5 montre une constitution possible du calculateur d'adresses.

Les valeurs de X et Y à partir desquelles sont calculées les adresses des échantillons utilisés au cours du calcul sont déduites des impulsions d'horloge provenant du moniteur de télévision 14 à la cadence de balayage des pixels dans une ligne et à la cadence des retours de ligne. Le signal d'horloge à la cadence de balayage des pixels est appliqué sur l'entrée 24 d'un compteur 26 initialisé, à partir de l'horloge de ligne, à une valeur négative correspondant au demi-nombre de pixels sur une ligne. La sortie du compteur 26 fournit en conséquence X qui est appliqué à l'entrée d'un matrice de transcodage 28, généralement constituée par une mémoire morte programmable, qui fournit $X^2$.

De façon similiare, un signal d'horloge à la cadence de ligne est appliqué sur l'entrée 30 d'un compteur de lignes 32 qui fournit Y à une seconde matrice de transcodage 34, similaire à la matrice 28.

Les sorties des matrices 28 et 34 sont appliquées aux deux entrées d'un additionneur 36 qui fournit $X^2+Y^2$. Une nouvelle matrice de transcodage, qui sera généralement encore une mémoire morte programmable 38, fournit $\sqrt{X^2+Y^2}$ sous forme d'un mot de plusieurs bits, 10 à 14 bits en général. Les bits de poids fort, en nombre correspondant à celui requis pour représenter les points disponibles en mémoire d'image, fournissent l'adresse $n$ du point du voisinage situé en haut du pixel, à gauche de ce dernier dans la partie droite de l'image. Les bits de poids faible fournissent la valeur d'interpolation $\Delta n$.

Dans le mode de réalisation montré en figure 5, la fonction X/Y est calculée en effectuant une somme itérative de 1/Y.

Pour cela, la sortie du compteur 32 est appliquée à une mémoire morte 40 qui fournit 1/Y. La valeur de 1/Y est appliquée à l'entrée d'un additionneur 42 qui reçoit également la sortie d'un registre 44 relié à la sortie de l'additionneur. L'accumulation s'effectue ainsi sur X pas successifs de façon à fournir X/Y sous la forme:

$$X/Y = \sum_{1}^{X} 1/Y$$

la valeur de X/Y est également appliquée à l'entrée d'une mémoire morte programmable 46 qui fournit arctg X/Y. Les bits de poids fort de cette sortie fournissent N tandis que les bits de poids faible fournissent $\Delta N$.

Par simple addition d'une unité on dispose également de $n+1$ et $N+1$.

Le schéma de la figure 5 est complété par des moyens d'initialisation et des moyens (non représentés) affectant des valeurs arbitraires pour le calcul des pixels de la première et de la dernière ligne de balayage de l'image télévision.

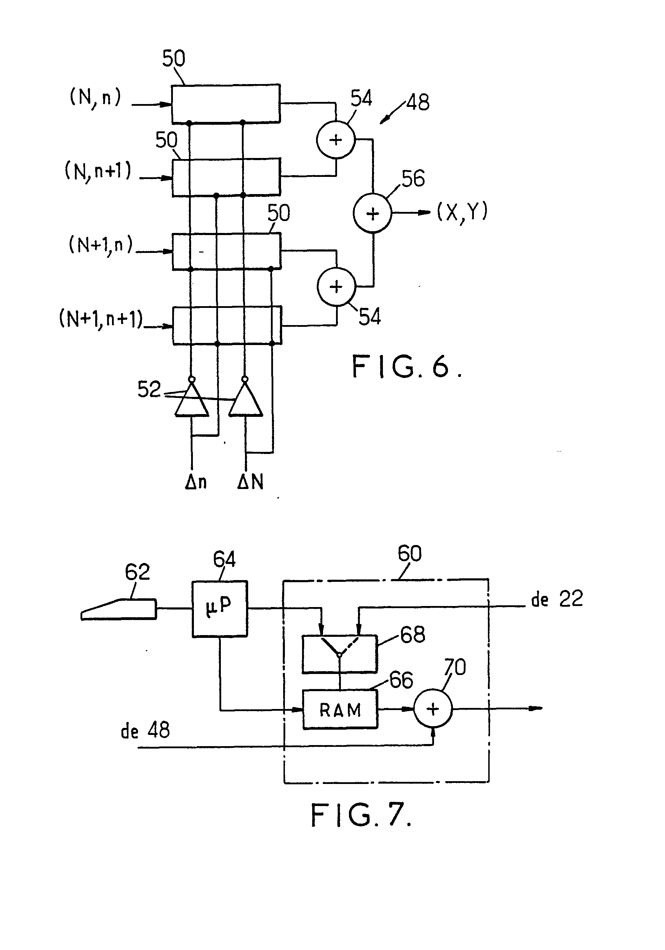

La valeur (X, Y) à affecter aux pixels de coordonnées X, Y est déterminée à partir des valeurs contenues dans la mémoire d'image 20, par un interpolateur 48 (Figure 4). Cet interpolateur 48 peut avoir la constitution de principe montrée en Figure 6. Il reçoit, sur quatre entrées, les mots représentant les échantillons stockés en mémoire 20 aux adresses N, n; N, n+1; N+1, n; et N+1, n+1. Ces adresses sont fournies directement par le calculateur 22 à la mémoire d'image 20.

L'interpolateur montré en figure 6 comporte quatre matrices de calcul identique 50, constituées par des mémoires mortes programmables, destinées chacune à multiplier la valeur affectée à l'un des points du voisinage par le coefficient d'interpolation approprié, $\Delta n$, $\Delta N$, $1-\Delta n$ ou $1-\Delta N$ (deux de ces valeurs étant obtenues par complémentation à l'aide d'inverseurs 52. Les sorties des mémoires 50 sont appliquées à des sommateurs 54 et 56 qui fournissent en sortie la valeur (X, Y) à affecter aux pixels X, Y.

Les résultats fournis par l'interpolateur peuvent être appliqués directement à un circuit 58 ayant une mémoire de ligne et un convertisseur N/A, attaquant le moniteur vidéo 14. Cependant, le processeur suivant l'invention comporte avantageusement des moyens permettant d'effectuer, sur l'information contenue en mémoire d'image 20, des traitements de compensation, de l'atténuation en profondeur et/ou de modification du format de présentation de l'image échographique.

Le processeur dont le schéma est montré en figure 4 comporte par exemple un circuit de correction de gain 60 permettant de compenser les variations d'absorption par le milieu en fonction de la profondeur de l'écho.

Le circuit de correction de gain 60 schématisé en figure 7 utilise le fait que les échos subissent une amplification logarithmique avant d'être stockés en mémoire d'image 20. De ce fait, une correction d'amplification revient à une addition. Si, ce qui est le cas le plus fréquent, l'amplication *a* doit varier exponentiellement en fonction de la profondeur *l* de l'écho, la correction se résume à une addition puisque:

$$\log [a (1) \cdot \exp (\alpha 1)] = \log a (1) + \alpha 1$$

Dans le mode de réalisation illustré, la valeur de α est introduite dans le processeur à l'aide d'un clavier 62 et elle est stockée dans la mémoire de travail d'un micro-processeur 64. Le micro-processeur 64 calcule les valeurs de la fonction α 1 et les stocke dans une mémoire vive 66, à des adresses successives correspondant à une série de valeurs ouvrant toute la plage de variation de la profongeur *l*. Au cours de l'opération de chargement de la mémoire 66, le commutateur d'adressage 68 est dans la position montrée en traits pleins. Ultérieurement, lors de l'exploitation, la mémoire 66 présente sur sa sortie la valeur d'amplification correspondant à l'adresse la plus proche de $\sqrt{X^2+Y^2}$. La correction proprement dite est effectuée dans un additionneur 70 qui reçoit la sortie de la mémoire 66 et celle de l'interpolateur 48. La valeur corrigée (brillance du pixel) apparaît sur la sortie de l'additionneur 70.

Il est important de noter que la valeur de $\sqrt{X^2+Y^2}$ est disponible du fait que son calcul est nécessaire pou l'interpolation, et que le fait d'effectuer la correction lors de la restitution (au lieu de la faire avant écriture en mémoire des échantillons) n'implique pas de complication appréciable.

La mémoire du circuit 58, constituant tampon, sera généralement organisée en deux pages ayant chacune une contenance correspondant au nombre de pixels d'une ligne de balayage télévision, L'une des pages est remplie par les données correspondant à une ligne, pendant que l'autre est lue par le convertisseur fournissant le signal vidéo analogique appliqué au moniteur 14.

Le circuit 60 peut comporter également des moyens permettant d'effectuer d'autres traitements, telle que la modification du contraste et le traitement non linéaire du niveau de brillance. Il suffit pour cela d'utiliser une matrice de transcodage constituée par une mémoire programmable.

Le processeur qui vient d'être décrit est applicable sans modification de ses circuits au traitement des signaux fournis par une sonde de balayage rectilinéaire. Il suffit pour cela que le calculateur d'adresses 22 comporte des boîtiers de mémoire morte contenant un second programme dans lequel la fonction arctg X/Y est remplacée par une fonction linéaire de X.

Dans le cas d'un tel balayage, il est particulièrement aisé de modifier l'agrandissement de l'image et de sélectionner une zone particulière de cette dernière en vue de l'affichage. Il suffit en effet dans ce cas d'introduire, à l'aide du clavier 62, les coordonnées d'un des angles de la zone rectangulaire à visualiser et l'agrandissement souhaité. Le calculateur d'adresses pourra déterminer, à partir de ces éléments, les valeurs *n*, Δn, N et ΔN correspondant à chacun des pixels à visualiser, en effectuant uniquement des multiplications et des additions.

Il est également possible, sans rien perdre de la rapidité du dispositif et au prix d'une simple augmentation du nombre des boîtiers de mémoire morte, de donner une possibilité de choix du format de visualisation. On dispose en effet en mémoire de l'ensemble des échantillons et il suffit que l'ensemble des valeurs de X et Y soient affectées d'un facteur de proportionnalité par les mémoires mortes 28, 34 et 40, pour que seule une fraction de l'image enregistrée soit visualisée, avec un agrandissement correspondant à la fraction retenue. Au prix d'une sujétion qui est généralement sans inconvénient réel (l'image visualisée reste symétrique par rapport à la ligne centrale d'exploration), on peut disposer de plusieurs formats selectionnables par simple choix entre plusieurs jeux de mémoires, ce qui n'implique qu'un coût additionnel faible.

## Revendications

1. Processeur numérique pour traiter des échantillons échographiques en vue d'en former une image, comprenant:

une mémoire d'image (20) comportant plusieurs pages de mémoire accessibles simultanément et organisées en rangées et colonnes, chacune des colonnes contenant tous les échantillons d'une même ligne d'exploration sectorielle et chacune des rangées correspondant à des échantillons ayant le même retard d'échantillonnage par rapport à l'émission, les échantillons étant répartis entre pages de façon que quatre points constituant un même voisinage autour d'un pixel reconstruit soient dans quatre pages différentes;

un calculateur d'adresses (22) permettant de déterminer, pour chaque pixel à reconstruire, appartenant à une matrice rectangulaire de visualisation, les adresses en mémoire des quatre échantillons du voisinage;

un opérateur d'interpolation (48) permettant de déterminer la valeur du pixel à partir des quatre échantillons du voisinage;

et des moyens (60) pour appliquer, au signal de sortie de l'opérateur, une correction fonction du retard d'échantillonnage, donc de la profondeur de l'échantillon,

caractérisé en ce que lesdits moyens sont agencés de façon à effecteur une correction de l'atténuation subie par les échantillons en fonction de leur profondeur et en ce que lesdits moyens agissent sur le signal de sortie de l'opérateur.

2. Processeur numérique suivant la revendication 1, caractérisé en ce que l'opérateur d'interpolation comprend plusieurs jeux de mémoires mortes de codage, chaque jeu correspondant à l'affectation de la totalité des pixels de la matrice rectangulaire de visualisation à une fraction différente du contenu de la mémoire d'image de façon à autoriser la sélection parmi plusieurs formats de visualisation.

3. Processeur selon la revendication 1 ou 2, caractérisé en ce que le calculateur d'adresse (22) comporte des moyens permettant de déterminer, à partir des coordonnées X, Y d'un pixel sur l'organe de visualisation, les adresses des quatre échantillons du voisinage du point et des valeurs d'interpolation entre ces quatre points.

4. Processeur selon la revendication 3, caractérisé en ce que le calculateur d'adresses (22) comporte des mémoires mortes programmables de détermination des valeurs $\sqrt{X^2+Y^2}$ et arctg X/Y, sous forme de mots de plusieurs bits dont les bits de poids fort fournissent l'adresse d'un des échantillons du voisinage et les bits de poids faible des valeurs d'interpolation.

5. Processeur selon la revendication 4, caractérisé en ce que les mémoires mortes programmables comprennent, d'une part, plusieurs jeux différents de trois mémoires mortes fournissant $X^2$, $Y^2$ et 1/Y, pour plusieurs formats de présentation différents et, d'autre part, un seul jeu de mémoires mortes pour calculer $\sqrt{X^2+Y^2}$ à partir de $X^2$ et $Y^2$ et pour calculer arctg X/Y à partir de X et de 1/Y.

6. Processeur selon l'une quelconque des revendications 1 à 5, caractérisé en ce que l'opérateur d'interpolation (48) comporte des mémoires mortes programmables de codage (50) identiques, réalisées de façon à multiplier chacune la valeur d'un des échantillons du voisinage avec un valeur de pondération fournie par le calculateur d'adresses.

7. Processeur selon l'une quelconque des revendications précédentes, caractérisé en ce que les moyens (60) de correction comportent un microprocesseur de calcul d'atténuation en fonction de la profondeur, une mémoire adressable (66) de stockage de l'atténuation pour diverses valeurs de la profondeur, et un additionneur monté de façon à recevoir, d'une part, la valeur de l'écho après amplification logarithmique de ce dernier et, d'autre part, la valeur de l'atténuation.

**Patentansprüche**

1. Numerischer Prozessor zur Verarbeitung der echografischen Abtastwerte zwecks Formen eines Bildes, umfassend:
—einen Bildspeicher (20), der mehrere Speicherseiten aufweist, auf die gleichzeitig Zugriff möglich ist und die in Reihen und Spalten organisiert sind, wobei jede der Spalten sämtliche Abtastwerte einer gleichen Sektorabtastlinie enthält und jede der Reihen Abtastwerten entspricht, die dieselbe Abtastverzögerung in bezug auf das Senden aufweisen, wobei die Abtastwerte auf Seiten so verteilt sind, daß sich vier Punkte, die eine gleiche Umgebung um ein rekonstruiertes Pixel bilden, in vier verschiedenen Seiten befinden;
—einen Adreßrechner (22), der es gestattet, für jedes zu rekonstruierende Pixel, das zu einer rechteckigen Anzeigematrix gehört, die Adressen im Speicher der vier Abtastwerte der Umgebung zu bestimmen;
—einen Interpolationsoperator (48), der die Bestimmung des Wertes des Pixels ausgehend von den vier Abtastwerten der Umgebung gestattet;
—und Mittel (60) zur Anwendung einer Korrektur bei dem Ausgangssignal des Operators, die abhängig von der Abtastverzögerung, somit der Tiefe des Abtastwertes, ist, dadurch gekennzeichnet,
—daß die Mittel so eingerichtet sind, daß sie eine Korrektur der Dämpfung durchführen, die die Abtastwerte abhängig von ihrer Tiefe erfahren, und daß die Mittel auf das Ausgangssignal des Operators wirken.

2. Numerischer Prozessor nach Anspruch 1, dadurch gekennzeichnet, daß der Interpolationsoperator mehrere Sätze von Kodierungsfestspeichern umfaßt, wobei jeder Satz der Zuordnung der Gesamtheit der Pixel der rechteckigen Anzeigematrix zu einer anderen Fraktion des Inhaltes des Bildspeichers entspricht derart, daß die Auswahl unter mehreren Anzeigeformaten zugelassen wird.

3. Prozessor nach Anspruch 1 oder 2, dadurch gekennzeichnet, daß der Adreßrechner (22) Mittel aufweist, die es gestatten, ausgehend von den Koordinaten X, Y eines Pixels auf dem Anzeigeorgan die Adressen der vier Anzeigewerte der Umgebung des Punktes und der Interpolationswerte zwischen diesen vier Punkten zu bestimmen.

4. Prozessor nach Anspruch 3, dadurch gekennzeichnet, daß der Adreßrechner (22) programmierbare Festspeicher zur Bestimmung der Werte $\sqrt{X^2+Y^2}$ und arc tg X/Y in Form von Worten von mehreren Bits aufweist, von denen die hochwertigen Bits die Adresse eines der Abtastwerte der Umgebung und die niederwertigen Bits die Interpolationswerte liefern.

5. Prozessor nach Anspruch 4, dadurch gekennzeichnet, daß die programmierbaren Festspeicher einerseits mehrere unterschiedliche Sätze von drei Festspeichern, die $X^2$, $Y^2$ und 1/Y für mehrere Formate zur unterschiedlichen Bilddarstellung liefern, und andererseits einen einzigen Satz von Festspeichern aufweisen, um $\sqrt{X^2+Y^2}$ ausgehend von $X^2$ und $Y^2$ zu berechnen umd um arc tg X/Y ausgehend von X und von 1/Y zu berechnen.

6. Prozessor nach eimem beliebigen der Ansprüche 1 bis 5, dadurch gekennzeichnet, daß der Interpolationsoperator (48) identische programmierbare Kodierungsfestspeicher (50) aufweist, die so

**EP 0 230 158 B1**

ausgeführt sind, daß sie jeweils den Wert eines der Abtastwerte der Umgebung mit einem Wichtungswert multiplizieren, der durch den Adreßrechner geliefert wird.

7. Prozessor nach einem beliebigen der vorhergehenden Ansprüche, dadurch gekennzeichnet, daß die Korrekturmittel (60) einen Mikroprozessor zur Dämpfungsberechnung abhängig von der Tiefe, einen adressierbaren Speicher (66) zur Speicherung der Dämpfung für verschiedene Werte der Tiefe und eine Addiereinrichtung aufweist, die so angebracht ist, daß sie einerseits den Wert des Echos nach logarithmischer Verstärkung des letzteren und andererseits den Dämpfungswert empfängt.

**Claims**

1. Digital processor for processing echo samples for forming an image therefrom, comprising:
an image memory (20) comprising a plurality of memory pages suitable for simultaneous access and organized as rows and columns, each of the columns containing all samples of a same sector scanning line and each of the rows corresponding to samples having the same sampling delay with respect to transmission, the samples being so distributed among the pages that four points constituting a same neighbouring around a reconstructed pixel are in four different pages;
an address computer (22) for determining, for each pixel to be reconstructed, belonging to a rectangular display matrix, the addresses of the four neighbouring samples in the memory;
an interpolation operator (48) for determining the value of the pixel from the four neighbouring samples;
and means (60) for applying, to the output signal of the operator, a correction which is responsive to the sampling delay, thus to the depth of the sample,
characterized in that said means are so arranged as to correct the amount of attenuation caused to the samples responsive to their depth and in that said means modify the output signal of the operator.

2. Digital processor according to claim 1, characterized in that the interpolation operator comprises a plurality of sets of encoding ROMs, each set corresponding to dedication of all pixels of the rectangular display matrix to a different fraction of the content of the image memory whereby one among a plurality of display formats may be selected.

3. Processor according to claim 1 or 2, characterized in that the address computer (22) comprises means for determining, from the coordinates X, Y of a pixel on the display unit, the addresses of the four samples neighbouring the point and interpolation values between the four points.

4. Processor according to claim 3, characterized in that the address computer (22) comprises programmable ROMs for determining the values of $\sqrt{X^2+Y^2}$ and arctan X/Y as multibit words whose MSBs provide the address of one of the neighbouring samples and the LSBs provide interpolation values.

5. Processor according to claim 4, characterized in that the programmable ROMs comprise, on the one hand, a plurality of different sets of three ROMs delivering $X^2$, $Y^2$ and 1/Y, for a plurality of different display formats, and, on the other hand, only one set of ROMs for computing $\sqrt{X^2+Y^2}$ from $X^2$ and $Y^2$ and for computing arctan X/Y from X and of 1/Y.

6. Process according to any one of claims 1—5, characterized in that the interpolation operator (48) comprises identical encoding programmable ROMs, so arranged that each one multiplies the value of one of the neighbouring samples by a weighing value delivered by the address computer.

7. Process according to any one of the preceding claims, characterized in that the correcting means (60) comprise a microprocessor for computing the amount of attenuation responsive to the depth, an addressable memory (66) for storing the amount of attenuation for several values of the depth, and an adder arranged for receiving, on the one hand, the value of the echo after logarithmic amplification of the latter and, on the other hand, the attenuation value.

7

FIG.1.

ligne 1

ligne Nm

θ

ligne N

ech. nm

lignes ( colonnes )

FIG.2.

1 2 3 4      N      Nm

1
2

points
( rangées )

n

nm

FIG.3.

N+1

N

n

Δn

n+1

ΔN

FIG.4.

FIG. 5.

FIG. 6.

FIG. 7.